# EUROPEAN PATENT SPECIFICATION

(11) **EP 4 143 679 B1**
(45) Date of publication and mention of the grant of the patent: **22.10.2025**
(21) Application number: 20724887.3
(22) Date of filing: 29.04.2020
(51) Int. Cl.: G06F 8/61, G06F 8/65, B66B 1/34, B66B 5/00, B66B 19/00, B66B 21/00

(54) **A SOLUTION FOR GENERATING AT LEAST ONE INSTALLATION OPERATION FOR AT LEAST ONE ONGOING INSTALLATION PROCESS AT AN INSTALLATION SITE**
LÖSUNG ZUR ERZEUGUNG VON MINDESTENS EINEM INSTALLATIONSVORGANG FÜR MINDESTENS EINEN LAUFENDEN INSTALLATIONSVORGANG AN EINEM INSTALLATIONSSTANDORT
SOLUTION POUR GÉNÉRER AU MOINS UNE OPÉRATION D'INSTALLATION POUR AU MOINS UN PROCESSUS D'INSTALLATION EN COURS AU NIVEAU D'UN SITE D'INSTALLATION

(43) Date of publication of application: 08.03.2023
(73) Proprietor: KONE Corporation, 00330 Helsinki (FI)
(72) Inventor: BELOV, Mika, 00330 Helsinki (FI); HUHTALA, Harri, 00330 Helsinki (FI); KOSKINEN, Santtu, 00330 Helsinki (FI); PIIRONEN, Mikko, 00330 Helsinki (FI); MATTILA, Mikko, 00330 Helsinki (FI); KORHONEN, Marko, 00330 Helsinki (FI)
(74) Representative: Berggren Oy
(86) International application number: PCT/FI2020/050283
(87) International publication number: WO 2021/219921

(56) References cited:
- CN-A- 103 854 124
- US-A1- 2018 321 951

## Description

### TECHNICAL FIELD

The invention concerns in general the technical field of installation operations. Especially the invention concerns installation operations of people conveyor systems or access control systems.

### BACKGROUND

Typically, during and/or after an installation of a people conveyor system, such as an elevator system or an escalator system, or an access control system, such as an automatic door system or a gate system, one or more issues, which may require one or more installation operations to be performed, may be detected. The detected issues may be minor issues, which do not prevent the use of the system, but the issues may also be major issues preventing the use of the system. Typically, during the first year after the installation of the system substantially great amount of issues are detected increasing first year call out rates.

Thus, there is need to develop further solutions in order to prevent and identify possible issues appearing during an installation process of a people conveyor system or an access control system.

A patent application US 2018/321951 A1 discloses a solution for tailoring instructions for configuring a smart device based on feedback received from the smart device and/or based on feedback received from a device that is separate from the smart device in a home environment.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a computing unit, an installation support system, and a computer program for generating at least one installation operation for at least one ongoing installation process at an installation site. Another objective of the invention is that the method, the computing unit, the installation support system, and the computer program for generating at least one installation operation for at least one ongoing installation process at an installation site improves identifying possible issues appearing during an installation process of a people conveyor system or an access control system.

The objectives of the invention are reached by a method, a computing unit, an installation support system, and a computer program as defined by the respective independent claims.

According to a first aspect, a method for generating at least one installation operation for at least one ongoing installation process of a people conveyor system or an access control at an installation site is provided, wherein the method comprises: obtaining site information of the at least one ongoing installation process at the installation site from a site control unit arranged at the installation site, obtaining site information gathered from one or more previous installation processes at one or more other installation sites from one or more external databases, defining at least one installation operation for the at least one ongoing installation process based on the site information of the at least one ongoing installation process and the site information gathered from the one or more previous installation processes, wherein the at least one installation operation comprises: updating one or more software versions, updating one or more operation parameters, and/or activation of one or more features, and generating at least one signal comprising an instruction to perform the at least one installation operation for the at least one ongoing installation process to the site control unit, wherein the defining the at least one installation operation for the at least one ongoing installation process comprises: detecting at least one issue in the site information of the at least one ongoing installation process, and defining the at least one installation operation by applying a machine learning module, wherein the machine learning module may receive the detected at least one issue in the site information of the at least one ongoing installation process as its input data and generate the at least one installation operation as the output data of the machine learning module by applying one or more machine learning techniques, and wherein the site information gathered from one or more previous installation processes at one or more other installation sites may be used as a training data to train the machine learning module.

The method may further comprise generating a remote support request to a remote monitoring center based on the obtained site information of the at least one ongoing installation process and/or the defined at least one installation operation.

Alternatively or in addition, the method may further comprise providing the site information of the at least one ongoing installation process and/or the defined at least one installation operation to the one or more databases for one or more coming installation processes at one or more other installation sites.

The site information of the at least one ongoing installation process may be obtained, by the site control unit, from one or more installed site devices, one or more not yet installed site devices, one or more external devices or systems, and/or back reporting of one or more tools.

According to a second aspect, a computing unit for generating at least one installation operation for at least one ongoing installation process of a people conveyor system or an access control system at an installation site is provided, wherein the computing unit comprises a processing unit being configured to cause the computing unit at least to perform: obtain site information of the at least one ongoing installation process at the installation site from a site control unit arranged at the installation site, obtain site information gathered from one or more previous installation processes at one or more other installation sites from one or more external databases, define at least one installation operation for the at least one ongoing installation process based on the site information of the ongoing installation process and the site information gathered from the one or more previous installation processes, wherein the at least one installation operation comprises: updating one or more software versions, updating one or more operation parameters, and/or activation of one or more features, and generate at least one signal comprising an instruction to perform the at least one installation operation for the at least one ongoing installation process to the site control unit, wherein the definition of the at least one installation operation for the at least one ongoing installation process comprises that the computing unit is configured to: detect at least one issue in the site information of the at least one ongoing installation process, and define the at least one installation operation by applying a machine learning module, wherein the machine learning module may be configured to receive the detected at least one issue in the site information of the at least one ongoing installation process as its input data and to generate the at least one installation operation as the output data of the machine learning module by applying one or more machine learning techniques, and wherein the site information gathered from one or more previous installation processes at one or more other installation sites may be used as a training data to train the machine learning module.

The computing unit may further be configured to generate a remote support request to a remote monitoring center based on the obtained site information of the at least one ongoing installation process and/or the defined at least one installation operation.

Alternatively or in addition the computing unit may further be configured to provide the site information of the at least one ongoing installation process and/or the defined at least one installation operation to the one or more databases for one or more coming installation processes at one or more other installation sites.

According to a third aspect, an installation support system for generating at least one installation operation for at least one ongoing installation process of a people conveyor system or an access control system at an installation site is provided, wherein the installation support system comprises: a site control unit arranged at the installation site, one or more external databases storing at least site information gathered from one or more previous installation processes at one or more other installation sites, and the computing unit as described above.

According to a fourth aspect, a computer program is provided, wherein the computer program comprises instructions which, when executed by a processing unit of a computing unit, cause the computing unit as described above to perform the method as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of an installation support system according to the invention.
Figure 2 illustrates schematically an example of a method according to the invention.
Figure 3 illustrates schematically another example of an installation support system according to the invention.
Figure 4 schematically illustrates an example of components of a computing unit according to the invention.

### DESCRIPTION OF THE EXEMPLIFYING EMBODIMENTS

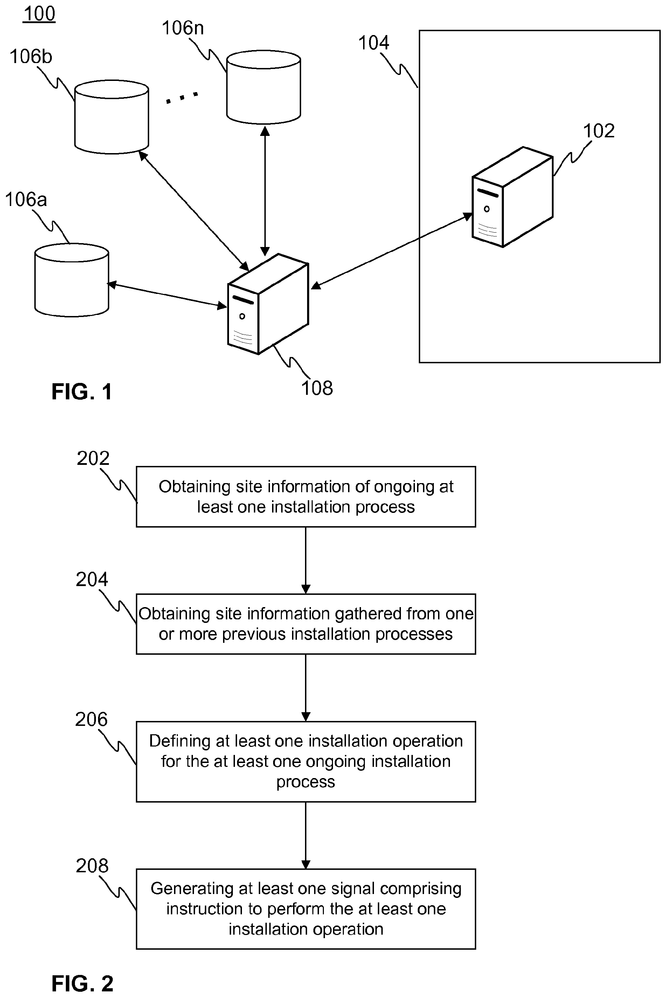

Figure 1 illustrates schematically an example of an installation support system 100 according to the invention for generating at least one installation operation for at least one ongoing installation process at an installation site. The installation support system 100 comprises a site control unit 102, one or more external databases 106a-106n, and a computing unit 108. The site control unit 102 is arranged at the installation site 104. The installation site 104 may be located in a people conveyor system, wherein the ongoing installation process may be an installation process of the people conveyor system or an installation process of at least part of the people conveyor system. The people conveyor system may be e.g. an elevator system, an escalator system, or a moving walkaway system. Alternatively, the installation site 104 may be located in an access control system, wherein the ongoing installation process may be an installation process of the access control system or an installation process of at least part of the access control system. The access control system may be e.g. an automatic door system or a gate system. The gate system may comprise one or more gate device, e.g. security gates. The automatic door system may comprise one or more automatic doors, e.g. elevator doors or building doors. The access control system is configured to allow access only for authorized users. The access control may be based on using keycards; tags; identification codes, such as personal identity number (PIN) code, ID number; and/or biometric technologies, such as fingerprint, facial recognition, iris recognition, retinal scan, voice recognition, etc.

The computing unit 108 is communicatively coupled to the site control unit 102, the one or more external databases 106a-106n, and any other entities of the installation support system 100. The communication between the computing unit 108 and the other entities of the installation support system 100 may be based on one or more known communication technologies, either wired or wireless. The implementation of the computing unit 108 may be done as a stand-alone computing entity or as a distributed computing environment between a plurality of stand-alone computing entities, such as a plurality of servers providing distributed computing resource.

Next an example of the method according to the invention is described by referring to Figure 2. Figure 2 schematically illustrates the invention as a flow chart.

At a step 202, the computing unit 108 obtains site information of at least one ongoing installation process at the installation site 104 from the site control unit 102. The site control unit 102 may obtain the site information of the at least one ongoing installation process from one or more installed site devices 302a-302c, one or more not yet installed site devices 304, one or more external devices or system 306a, 306b, and/or back reporting of one or more tools 308. The site control unit 102 provides the obtained site information to the computing unit 108. The site devices 302-302a, 304 may comprise any devices directly connectable to the people conveyor system or to the access control system. For example, the site devices 302a-302a, 304 may comprise, but are not limited to, a destination operation panel (DOP), a destination guide (DG), an elevator guide (EG), an access control system card reader unit, media screen solution display unit, indoor positioning system and/or any other devices installed or to be installed to the installation site 104. Each of site device 302a-302a may need to be installed, i.e. at least somehow commissioned to belong as a part of site solution. This means that a technician may enter some sitespecific information to the site device 302a-302a, e.g. manually through the device user interface (UI), showing configuration QR code to a camera unit of the site device 302a-302a, via an external memory device, e.g. SD card or similar, and/or via a wireless technology like NFC. The site control unit 102 may obtain site information from the one or more installed site devices 302a-302c as described above. Alternatively or in addition, the site control unit 102 may also perform a site inventory to obtain the site information from the site devices 302 which have not yet been commissioned. The site control unit 102 may be aware that there may be a plurality of site devices 302-302a, 304, but a location or even role of each connected site device 302-302a, 304 may not be currently fully known. The external devices or systems, e.g. external sensor devices, 306a, 306b, may comprise third-party devices or systems on the installation site 104 connected using e.g. an application programming interface (API) integration interface or some other integration interface, to the system, i.e. the people conveyor system or an access control system. For example, the installation site 104 may comprise one or more external devices or systems 306a, 306b, such as a video surveillance system and/or Building Management System (BMS), which may provide site information to the site control unit 102 via the integration interfaces. The one or more tools 308 may comprise e.g. one or more installation tools 308 used in the at least one ongoing installation process at the installation site 104.

At a step 204, the computing unit 108 obtains site information gathered from one or more previous installation processes at one or more other installation sites from the one or more external databases 106a-106n. The site information gathered from the one or more previous installation processes at one or more other installation sites may be stored to the one or more external databases 106a-106n.

The obtained site information of the at least one ongoing installation process at the installation site 104 and/or the site information gathered from one or more previous installation processes at one or more other installation sites may comprise configuration information, software information, installation status information, statistical information, installation personnel information, and/or material flow information, of the respective installation process. The site information gathered from the one or more previous installation processes may further comprise: identified issues information, corrective installation operations, and/or preventive installation operations, of the respective installation process.

At a step 206, the computing unit 108 defines at least one installation operation for the at least one ongoing installation process at the installation site 104 based on the site information of the at least one ongoing installation process at the installation site 104 and the site information gathered from the one or more previous installation processes. The use of information already available from the one or more previous installation processes enables a prevention and/or an identification of issues appearing during the installation process at the installation site 104. Moreover, it eases and/or expedites a definition of the at least one installation operation suitable for the at least one ongoing installation process at the installation site 104. The at least one installation operation may be a preventive installation operation or a corrective installation operation. Alternatively or in addition, the identification of the issues appearing during the installation process at the installation site 104 may be improved and expedited. The one or more issues may be minor issues, which do not prevent the use of the system, but the one or more issues may also be major issues preventing the use of the system. The one or more issues may comprise for example, but is not limited to, faults, defects, deficiencies, outdated software versions, and/or outdated operation parameters. Moreover, the handover quality may be improved and the first year call out rates may be reduced, which in turn help maintaining installation schedule, quality and cost targets.

The defining of the at least one installation operation at the step 206 comprises detecting at least one issue in the site information of the at least one ongoing installation process and defining the at least one installation operation by applying a machine learning module 450, i.e. a machine learning model. The machine learning module 450 receives the detected at least one issue in the site information of the at least one ongoing installation process at the installation site 104 as its input data and generates the at least one installation operation as the output data of the machine learning module 450 by applying one or more machine learning techniques. For example, the following known one or more machine learning techniques may be applied: decision trees, support vector machines, neural networks, or any suitable data-driven method. The computing unit 108 is able to infer by using the machine learning module 450 from the input data, i.e. the detected at least one issue in the site information of the at least one ongoing installation process, the typical output data of the machine learning model, i.e. what is the assumed at least one installation operation. In other words, the machine learning module 450 processes the input data, i.e. the detected at least one issue in the site information of the at least one ongoing installation process, and provides the output data, i.e. the at least one installation operation. The site information gathered from one or more previous installation processes at one or more other installation sites is used as a training data to train the machine learning module 450. When the machine learning module 450 is trained properly, the accuracy of the generated at least one installation operation may be increased. In order to improve the training of the machine learning module 450, versatile training data may preferably be used. The accuracy of the generated at least one installation operation may also depend on the initial training data used for training of the machine learning module 450. This enables providing a continuously learning method for generating the at least one installation operation for the at least one ongoing installation process of at the installation site 104.

According to an example useful for understanding the invention, the defining of the at least one installation operation at the step 206 may alternatively comprise detecting at least one issue in the site information of the at least one ongoing installation process at the installation site 104, detecting a corresponding at least one issue in the site information gathered from one or more corresponding previous installation processes, detecting at least one installation operation performed in the one or more corresponding previous installation processes in response to the detected at least one issue in the site information gathered from one or more corresponding previous installation processes, and using the detected at least one installation operation performed in the one or more corresponding previous installation processes as the defined at least one installation operation for the at least one ongoing installation process at the installation site 104. This enables providing a straightforward and simple method for generating the at least one installation operation for the at least one ongoing installation process of at the installation site 104.

At a step 208, the computing unit 108 generates at least one signal comprising an instruction to perform the at least one installation operation for the at least one ongoing installation process to the site control unit 104 in response to defining the at least one installation operation. This enables easy and fast correction of the detected issues appeared during the installation process at the installation site 104 with the at least one installation operation. The at least one installation operation comprises updating one or more software versions of the one or more installed site devices 302a-302c, updating one or more operation parameters, and/or activation of one or more features. The at least one installation operation may be a preventive installation operation or a corrective installation operation. The one or more features may be customized for the installation site 104 or according to customer specific need. According to a non-limiting example the one or more features may comprise a fire, an invasion or an evacuation mode where the people conveyor system or an access control system can be used for specific situations. In this kind of mode, the people conveyor system or an access control system may be behaving a different way than in the normal operation mode. According to another non-limiting example the one or more features may comprise a cleaning mode. According to yet another non-limiting example the one or more features may comprise e.g. a VIP operation mode.

The method may further comprise generating by the computing unit 108 a remote support request to a centralized remote monitoring center 310 based on the obtained site information of the at least one ongoing installation process at the installation site 104 and/or the defined at least one installation operation for the at least one ongoing installation process at the installation site 104. This enables a possibility to utilize the centralized remote monitoring center 310 to perform the defined at least one installation operation and/or at least one further installation operation in order to correct the detected issues appeared during the installation process at the installation site 104. In response to receiving the remote support request, the centralized remote monitoring center 310 may perform remotely the defined at least one installation operation and/or at least one further installation and/or support operation. Alternatively or in addition, in response to receiving the remote support request, the centralized remote monitoring center 310 may provide guidance and/or instructions for site personnel, e.g. a site engineer, at the installation site 104. Alternatively or in addition, the centralized remote monitoring center 310 may request some more details from the installation site 104 automatically or manually and/or search for similar issues from the one or more corresponding previous installation processes at the one or more other installation sites from the one or more external databases 106a-106n.

Alternatively or in addition, the method may further comprise providing by the computing unit 108 the obtained site information of the at least one ongoing installation process at the installation site 104 and/or the defined at least one installation operation for the at least one ongoing installation process at the installation site 104 to the one or more databases 106a-106n for one or more coming installation processes at one or more other installation sites. This enables that the site information gathered from the at least one ongoing installation process at the installation site 104 and/or the at least one installation operation defined for the at least one ongoing installation process at the installation site 104 may be utilized in one or more coming installation processes at one or more other installation sites.

Alternatively or in addition, the method may further comprise obtaining by the computing unit 108 process information of the at least one ongoing installation process at the installation site 104 and/or process information gathered from the one or more corresponding previous installation processes from one or more external databases 106a-106n and using by the computing unit 108 the obtained process information in the definition of the at least one installation operation for the at least one ongoing installation process at the step 206. The process information may comprise for example, but is not limited to, Building Information Mode (BIM) information; Bill of Material (BOM) information, i.e. information about what kind of material is delivered to the site; drawings; photos; testing reports; and/or manuals. This may improve further the prevention and/or identification of the issues appearing during the installation process at the installation site 104. Alternatively or in addition, this may improve further the definition of the at least one installation operation suitable for the at least one ongoing installation process at the installation site 104.

Above the invention is defined referring to the method according to the invention. Next the invention will be described referring to operations of the entities of the installation support system 100 according to the invention.

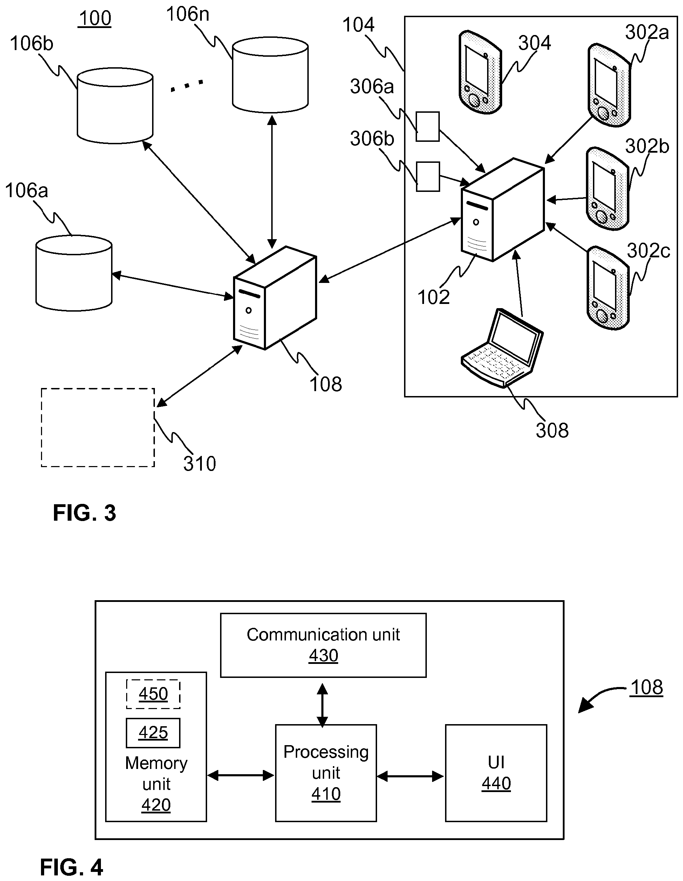

The computing unit 108 is configured to obtain site information of at least one ongoing installation process at the installation site 104 from the site control unit 102. The site control unit 102 may obtain the site information of the at least one ongoing installation process from one or more installed site devices 302a-302c, one or more not yet installed site devices 304, one or more external devices or systems 306a, 306b, and/or back reporting of one or more tools 308. The site control unit 102 is configured to provide the obtained site information to the computing unit 108. The site control unit 102 may be communicatively coupled to the one or more installed site devices 302a-302c, the one or more not yet installed site devices 304, the one or more external devices or systems 306a, 306b, the one or more tools 308, and any other entities at the installation site 104. The communication between the site control unit 102 and the other entities at the installation site 104 may be based on one or more known communication technologies, either wired or wireless. Figure 3 illustrates schematically an example of an installation support system 100, wherein the installation site 104 comprises three installed site devices 302a-302n; one site device 304 that exists on the installation site 104, but is not yet installed; two external devices or systems 306a, 306b; and one tool 308 providing back reporting. However, the invention is not limited to that and the installation site 104 may comprise any other number of entities. Moreover, the installation site 104 does not need to comprise all entities illustrated in the example of Figure 3. Alternatively or in addition, the number of different entities at the installation site 104 may vary during the at least one installation process at the installation site 104.

The computing unit 108 is further configured to obtain site information gathered from one or more previous installation processes at one or more other installation sites from the one or more external databases 106a-106n. The site information gathered from the one or more previous installation processes at one or more other installation sites may be stored to the one or more external databases 106a-106n.

The obtained site information of the at least one ongoing installation process at the installation site 104 and/or the site information gathered from one or more previous installation processes at one or more other installation sites may comprise configuration information, software information, installation status information, statistical information, installation personnel information, and/or material flow information, of the respective installation process. The site information gathered from the one or more previous installation processes may further comprise: identified issues information, corrective installation operations, and/or preventive installation operations, of the respective installation process.

The computing unit 108 is further configured to define at least one installation operation for the at least one ongoing installation process at the installation site 104 based on the site information of the at least one ongoing installation process at the installation site 104 and the site information gathered from the one or more previous installation processes. The use of information already available from the one or more previous installation processes enables a prevention and/or an identification of issues appearing during the installation process at the installation site 104. Moreover, it eases and/or expedites a definition of the at least one installation operation suitable for the at least one ongoing installation process at the installation site 104. The at least one installation operation may be a preventive installation operation or a corrective installation operation. Alternatively or in addition, the identification of the issues appearing during the installation process at the installation site 104 may be improved and expedited. The one or more issues may be minor issues, which do not prevent the use of the system, but the one or more issues may also be major issues preventing the use of the system. The one or more issues may comprise for example, but is not limited to, faults, defects, deficiencies, outdated software versions, and/or outdated operation parameters. Moreover, the handover quality may be improved and the first year call out rates may be reduced, which in turn help maintaining installation schedule, quality and cost targets.

The definition of the at least one installation operation comprises detecting by the computing unit 108 at least one issue in the site information of the at least one ongoing installation process and defining by the computing unit 108 the at least one installation operation by applying a machine learning module 450, i.e. a machine learning model. The machine learning module 450 is configured to receive the detected at least one issue in the site information of the at least one ongoing installation process at the installation site 104 as its input data and to generate the at least one installation operation as the output data of the machine learning module 450 by applying one or more machine learning techniques. For example, the following known one or more machine learning techniques may be applied: decision trees, support vector machines, neural networks, or any suitable data-driven method. The computing unit 108 is able to infer by using the machine learning module 450 from the input data, i.e. the detected at least one issue in the site information of the at least one ongoing installation process, the typical output data of the machine learning model, i.e. what is the assumed at least one installation operation. In other words, the machine learning module 450 is configured to process the input data, i.e. the detected at least one issue in the site information of the at least one ongoing installation process, and to provide the output data, i.e. the at least one installation operation. The site information gathered from one or more previous installation processes at one or more other installation sites is used as a training data to train the machine learning module 450. When the machine learning module 450 is trained properly, the accuracy of the generated at least one installation operation may be increased. In order to improve the training of the machine learning module 450, versatile training data may preferably be used. The accuracy of the generated at least one installation operation may also depend on the initial training data used for training of the machine learning module 450. This enables providing a continuously learning method for generating the at least one installation operation for the at least one ongoing installation process of at the installation site 104.

According to an example useful for understanding the invention, the definition of the at least one installation operation may alternatively comprise the following operations by the computing unit 108. The computing unit 108 may be configured to detect at least one issue in the site information of the at least one ongoing installation process at the installation site 104. The computing unit 108 may further be configured to detect a corresponding at least one issue in the site information gathered from one or more corresponding previous installation processes and to detect at least one installation operation performed in the one or more corresponding previous installation processes in response to the detected at least one issue in the site information gathered from one or more corresponding previous installation processes. The computing unit 108 may further be configured to use the detected at least one installation operation performed in the one or more corresponding previous installation processes as the defined at least one installation operation for the at least one ongoing installation process at the installation site 104. This enables providing a straightforward and simple method for generating the at least one installation operation for the at least one ongoing installation process of at the installation site 104.

The computing unit 108 is configured to generate at least one signal comprising an instruction to perform the at least one installation operation for the at least one ongoing installation process to the site control unit 104 in response to defining the at least one installation operation. This enables easy and fast correction of the detected issues appeared during the installation process at the installation site 104 with the at least one installation operation. The at least one installation operation comprises updating one or more software versions of the one or more installed site devices 302a-302c, updating one or more operation parameters, and/or activation of one or more features. The at least one installation operation may be a preventive installation operation or a corrective installation operation. The one or more features may be customized for the installation site 104 or according to customer specific need.

The computing unit 108 may further be configured to generate a remote support request to a centralized remote monitoring center 310 based on the obtained site information of the at least one ongoing installation process at the installation site 104 and/or the defined at least one installation operation for the at least one ongoing installation process at the installation site 104. This enables a possibility to utilize the centralized remote monitoring center to perform the defined at least one installation operation and/or at least one further installation operation in order to correct the detected issues appeared during the installation process at the installation site 104. The remote monitoring center 310 is illustrated as an optional entity of the installation support system 100 according to the invention in the example of Figure 3. In response to receiving the remote support request, the centralized remote monitoring center 310 may be configured to perform remotely the defined at least one installation operation and/or at least one further installation and/or support operation. Alternatively or in addition, in response to receiving the remote support request, the centralized remote monitoring center 310 may be configured to provide guidance and/or instructions for site personnel, e.g. a site engineer, at the installation site 104. Alternatively or in addition, the centralized remote monitoring center 310 may be configured to request some more details from the installation site 104 automatically or manually and/or search for similar issues from the one or more corresponding previous installation processes at the one or more other installation sites from the one or more external databases 106a-106n.

Alternatively or in addition, the computing unit 108 may further be configured to provide the obtained site information of the at least one ongoing installation process at the installation site 104 and/or the defined at least one installation operation for the at least one ongoing installation process at the installation site 104 to the one or more databases 106a-106n for one or more coming installation processes at one or more other installation sites. This enables that the site information gathered from the at least one ongoing installation process at the installation site 104 and/or the at least one installation operation defined for the at least one ongoing installation process at the installation site 104 may be utilized in one or more coming installation processes at one or more other installation sites.

Alternatively or in addition, the computing unit 108 may further be configured to obtain process information of the at least one ongoing installation process at the installation site 104 and/or process information gathered from the one or more corresponding previous installation processes from one or more external databases 106a-106n and to use the obtained process information in the definition of the at least one installation operation for the at least one ongoing installation process at the installation site 104. The process information may comprise for example, but is not limited to, Building Information Mode (BIM) information; Bill of Material (BOM) information, i.e. information about what kind of material is delivered to the site; drawings; photos; testing reports; and/or manuals. This may improve further the prevention and/or identification of the issues appearing during the installation process at the installation site 104. Alternatively or in addition, this may improve further the definition of the at least one installation operation suitable for the at least one ongoing installation process at the installation site 104.

As discussed above the one or more external databases 106a-106n may be configured to store information. The information stored by the one or more external databases 106a-106n may comprise for example, but is not limited to, site information gathered from one or more previous installation processes at one or more other installation sites than the installation site 104 where the installation process is going on, the obtained site information of the at least one ongoing installation process at the installation site 104, the defined at least one installation operation for the at least one ongoing installation process at the installation site 104, process information of the at least one ongoing installation process at the installation site 104, process information gathered from the one or more corresponding previous installation processes at one or more other installation sites than the installation site 104 where the installation process is going on, and/or any other information. The external entity herein means an entity that locates separate from the installation site 104 and the computing unit 108. In the examples of Figures 1 and 3 the installation support system 100 comprises three external databases 106a-106n. However, the invention is not limited to that and the installation support system 100 may comprise any other number of external databases 106a-106n. Each external database 106a-106n may be configured to store information from at least one installation process at one or more installation sites. Alternatively or in addition, each external database 106a-106n may be configured to store at least one type of information. In other words, the stored information may be distributed between the one or more external databases 106a-106n based on the installation site from which the stored information is gathered or obtained and/or based on the type of the stored information.

Figure 4 schematically illustrates an example of components of the computing unit 108 according to the invention. The computing unit 108 may comprise a processing unit 410 comprising at least one processor, a memory unit 420 comprising at least one memory, a communication unit 430 comprising one or more communication devices, and possibly a user interface (UI) unit 440. The memory unit 420 may store portions of computer program code 425, the machine learning module, i.e. machine learning model, 450, and any other data, and the processing unit 410 may cause the computing unit 108 to implement the method steps as described by executing at least some portions of the computer program code 425 stored in the memory unit 420. For sake of clarity, the processor herein refers to any unit suitable for processing information and control the operation of the computing unit 108, among other tasks. The operations may also be implemented with a microcontroller solution with embedded software. Similarly, the memory is not limited to a certain type of memory only, but any memory type suitable for storing the described pieces of information may be applied in the context of the present invention. The communication unit 430 may be based on at least one known communication technologies, either wired or wireless, in order to exchange pieces of information as described earlier. The communication unit 430 provides an interface for communication with any external unit, such as the site control unit 102, the one or more external databases 106a-106n, the remote monitoring center 310, and/or any external systems. The communication unit 430 may comprise one or more communication devices, e.g. radio transceiver, antenna, etc. The user interface 440 may comprise I/O devices, such as buttons, keyboard, touch screen, microphone, loudspeaker, display and so on, for receiving input and outputting information. The computer program 425 may be stored in a non-statutory tangible computer readable medium, e.g. an USB stick or a CD-ROM disc. Some non-limiting examples of the computing unit 108 may e.g. be a server, cloud server, personal computer, laptop computer, computing circuit, or a network of computing devices.

The specific examples provided in the description given above should not be construed as limiting the applicability and/or the interpretation of the appended claims. Lists and groups of examples provided in the description given above are not exhaustive unless otherwise explicitly stated.

## Claims

1. A method for generating at least one installation operation for at least one ongoing installation process of a people conveyor system or an access control system at an installation site (104), the method comprising:
obtaining (202) site information of the at least one ongoing installation process at the installation site (104) from a site control unit (102) arranged at the installation site (104),
obtaining (204) site information gathered from one or more previous installation processes at one or more other installation sites from one or more external databases (106a-106n),
defining (206) at least one installation operation for the at least one ongoing installation process based on the site information of the at least one ongoing installation process and the site information gathered from the one or more previous installation processes, wherein the at least one installation operation comprises: updating one or more software versions, updating one or more operation parameters, and/or activation of one or more features, and
generating (208) at least one signal comprising an instruction to perform the at least one installation operation for the at least one ongoing installation process to the site control unit (102),
wherein the defining (206) the at least one installation operation for the at least one ongoing installation process comprises:
detecting at least one issue in the site information of the at least one ongoing installation process, and
defining the at least one installation operation by applying a machine learning module (450),
wherein the machine learning module (450) receives the detected at least one issue in the site information of the at least one ongoing installation process as its input data and generates the at least one installation operation as the output data of the machine learning module (450) by applying one or more machine learning techniques, and
wherein the site information gathered from one or more previous installation processes at one or more other installation sites is used as a training data to train the machine learning module (450).

2. The method according to claim 1, further comprising generating a remote support request to a remote monitoring center (310) based on the obtained site information of the at least one ongoing installation process and/or the defined at least one installation operation.

3. The method according to any of the preceding claims, further comprising providing the site information of the at least one ongoing installation process and/or the defined at least one installation operation to the one or more databases (106a-106n) for one or more coming installation processes at one or more other installation sites.

4. The method according to any of the preceding claims, wherein the site information of the at least one ongoing installation process is obtained, by the site control unit (102), from one or more installed site devices (302a-302c), one or more not yet installed site devices (304), one or more external devices or systems (306a, 306b), and/or back reporting of one or more tools (308).

5. A computing unit (108) for generating at least one installation operation for at least one ongoing installation process of a people conveyor system or an access control system at an installation site (104), wherein the computing unit (108) comprises a processing unit (410) being configured to cause the computing unit (108) at least to perform:
obtain site information of the at least one ongoing installation process at the installation site from a site control unit (102) arranged at the installation site (104),
obtain site information gathered from one or more previous installation processes at one or more other installation sites from one or more external databases (106a-106n),
define at least one installation operation for the at least one ongoing installation process based on the site information of the ongoing installation process and the site information gathered from the one or more previous installation processes, wherein the at least one installation operation comprises: updating one or more software versions, updating one or more operation parameters, and/or activation of one or more features, and
generate at least one signal comprising an instruction to perform the at least one installation operation for the at least one ongoing installation process to the site control unit (102),
wherein the definition of the at least one installation operation for the at least one ongoing installation process comprises that the computing unit (108) is configured to:
detect at least one issue in the site information of the at least one ongoing installation process, and
define the at least one installation operation by applying a machine learning module (450),
wherein the machine learning module (450) is configured to receive the detected at least one issue in the site information of the at least one ongoing installation process as its input data and to generate the at least one installation operation as the output data of the machine learning module (450) by applying one or more machine learning techniques, and
wherein the site information gathered from one or more previous installation processes at one or more other installation sites is used as a training data to train the machine learning module (450).

6. The computing unit (108) according to claim 5, further configured to generate a remote support request to a remote monitoring center (310) based on the obtained site information of the at least one ongoing installation process and/or the defined at least one installation operation.

7. The computing unit (108) according to any of claims 5 or 6, further configured to provide the site information of the at least one ongoing installation process and/or the defined at least one installation operation to the one or more databases (106a-106n) for one or more coming installation processes at one or more other installation sites.

8. An installation support system (100) for generating at least one installation operation for at least one ongoing installation process of a people conveyor system or an access control system at an installation site (104), the installation support system (100) comprising:
a site control unit (102) arranged at the installation site (104),
one or more external databases (106a-106n) storing at least site information gathered from one or more previous installation processes at one or more other installation sites, and
the computing unit (108) according to any of claims 5 to 7.

9. A computer program (425) comprising instructions which, when executed by a processing unit (410) of a computing unit (108), cause the computing unit (108) according to any of claims 5 to 7 to perform the method according to any of claims 1 to 4.

## Patentansprüche

1. Verfahren zum Erzeugen mindestens einer Installationsoperation für mindestens einen laufenden Installationsprozess eines Personenfördersystems oder eines Zugangssteuersystems an einem Installationsort (104), das Verfahren umfassend:
Erhalten (202) von Standortinformationen des mindestens einen laufenden Installationsprozesses am Installationsstandort (104) von einer am Installationsstandort (104) angeordneten Standortsteuereinheit (102),
Erhalten (204) von Standortinformationen, die aus einem oder mehreren früheren Installationsprozessen an einem oder mehreren anderen Installationsstandorten aus einer oder mehreren externen Datenbanken (106a-106n) gesammelt wurden,
Definieren (206) mindestens einer Installationsoperation für den mindestens einen laufenden Installationsprozess basierend auf den Standortinformationen des mindestens einen laufenden Installationsprozesses und den Standortinformationen, die von dem einen oder den mehreren vorherigen Installationsprozessen gesammelt wurden, wobei die mindestens eine Installationsoperation Folgendes umfasst: Aktualisieren einer oder mehrerer Softwareversionen, Aktualisieren eines oder mehrerer Betriebsparameter und/oder Aktivieren eines oder mehrerer Merkmale, und
Erzeugen (208) mindestens eines Signals, das eine Anweisung zur Durchführung der mindestens einen Installationsoperation für den mindestens einen laufenden Installationsprozess an die Standortsteuereinheit (102) umfasst,
wobei das Definieren (206) der mindestens einen Installationsoperation für den mindestens einen laufenden Installationsprozess Folgendes umfasst:
Erfassen mindestens eines Problems in den Standortinformationen des mindestens einen laufenden Installationsprozesses, und
Definieren der mindestens einen Installationsoperation durch Anwenden eines maschinengelernten Moduls (450),
wobei das maschinelle Lernmodul (450) das erfasste mindestens eine Problem in den Standortinformationen des mindestens einen laufenden Installationsprozesses als seine Eingabedaten empfängt und die mindestens eine Installationsoperation als die Ausgabedaten des maschinellen Lernmoduls (450) durch Anwendung einer oder mehrerer maschineller Lerntechniken erzeugt, und
wobei die Standortinformationen, die von einem oder mehreren früheren Installationsprozessen an einem oder mehreren anderen Installationsstandorten gesammelt wurden, als Trainingsdaten verwendet werden, um das maschinelle Lernmodul (450) zu trainieren.

2. Verfahren nach Anspruch 1, ferner umfassend das Erzeugen einer Fernunterstützungsanfrage an ein Fernüberwachungszentrum (310) basierend auf den erhaltenen Standortinformationen des mindestens einen laufenden Installationsprozesses und/oder der definierten mindestens einen Installationsoperation.

3. Verfahren nach einem der vorstehenden Ansprüche, ferner umfassend das Bereitstellen der Standortinformationen des mindestens einen laufenden Installationsprozesses und/oder der mindestens einen definierten Installationsoperation an die eine oder mehrere Datenbanken (106a-106n) für einen oder mehrere kommende Installationsprozesse an einem oder mehreren anderen Installationsstandorten.

4. Verfahren nach einem der vorstehenden Ansprüche, wobei die Standortinformation des mindestens einen laufenden Installationsprozesses von der Standortsteuereinheit (102) von einer oder mehreren installierten Standortvorrichtungen (302a-302c), einer oder mehreren noch nicht installierten Standortvorrichtungen (304), einer oder mehreren externen Vorrichtungen oder Systemen (306a, 306b) und/oder einer Rückmeldung eines oder mehrerer Werkzeuge (308) erhalten wird.

5. Recheneinheit (108) zum Erzeugen mindestens einer Installationsoperation für mindestens einen laufenden Installationsprozess eines Personenfördersystems oder eines Zugangssteuersystems an einem Installationsstandort (104), wobei die Recheneinheit (108) eine Verarbeitungseinheit (410) umfasst, die konfiguriert ist, um die Recheneinheit (108) mindestens zur Durchführung von Folgendem zu veranlassen:
Erhalten von Standortinformationen des mindestens einen laufenden Installationsprozesses am Installationsstandort von einer am Installationsstandort (104) angeordneten Standortsteuereinheit (102),
Erhalten von Standortinformationen, die aus einem oder mehreren früheren Installationsprozessen an einem oder mehreren anderen Installationsstandorten aus einer oder mehreren externen Datenbanken (106a-106n) gesammelt wurden,
Definieren mindestens einer Installationsoperation für den mindestens einen laufenden Installationsprozess basierend auf den Standortinformationen des einen laufenden Installationsprozesses und den Standortinformationen, die von dem einen oder den mehreren vorherigen Installationsprozessen gesammelt wurden, wobei die mindestens eine Installationsoperation Folgendes umfasst: Aktualisieren einer oder mehrerer Softwareversionen, Aktualisieren eines oder mehrerer Betriebsparameter und/oder Aktivieren eines oder mehrerer Merkmale, und
Erzeugen mindestens eines Signals, das eine Anweisung zur Durchführung der mindestens einen Installationsoperation für den mindestens einen laufenden Installationsprozess an die Standortsteuereinheit (102) umfasst,
wobei die Definition der mindestens einen Installationsoperation für den mindestens einen laufenden Installationsprozess umfasst, dass die Recheneinheit (108) konfiguriert ist zum:
Erfassen mindestens eines Problems in den Standortinformationen des mindestens einen laufenden Installationsprozesses, und
Definieren der mindestens einen Installationsoperation durch Anwenden eines maschinengelernten Moduls (450),
wobei das maschinelle Lernmodul (450) konfiguriert ist, um das erfasste mindestens eine Problem in den Standortinformationen des mindestens einen laufenden Installationsprozesses als seine Eingabedaten zu empfangen und die mindestens eine Installationsoperation als die Ausgabedaten des maschinellen Lernmoduls (450) durch Anwendung einer oder mehrerer maschineller Lerntechniken zu erzeugen, und
wobei die Standortinformationen, die von einem oder mehreren früheren Installationsprozessen an einem oder mehreren anderen Installationsstandorten gesammelt wurden, als Trainingsdaten verwendet werden, um das maschinelle Lernmodul (450) zu trainieren.

6. Recheneinheit (108) nach Anspruch 5, ferner konfiguriert zum Erzeugen einer Fernunterstützungsanfrage an ein Fernüberwachungszentrum (310) basierend auf den erhaltenen Standortinformationen des mindestens einen laufenden Installationsprozesses und/oder der definierten mindestens einen Installationsoperation.

7. Recheneinheit (108) nach einem der Ansprüche 5 oder 6, ferner konfiguriert, um die Standortinformationen des mindestens einen laufenden Installationsprozesses und/oder der mindestens einen definierten Installationsoperation an die eine oder mehrere Datenbanken (106a-106n) für einen oder mehrere kommende Installationsprozesse an einem oder mehreren anderen Installationsstandorten bereitzustellen.

8. Installationsunterstützungssystem (100) zum Erzeugen mindestens einer Installationsoperation für mindestens einen laufenden Installationsprozess eines Personenfördersystems oder eines Zugangssteuersystems an einem Installationsstandort (104), das Installationsunterstützungssystem (100) umfassend:
eine Standortsteuereinheit (102), die am Installationsstandort (104) angeordnet ist,
eine oder mehrere externe Datenbanken (106a-106n), in denen mindestens Standortinformationen gespeichert sind, die aus einem oder mehreren früheren Installationsprozessen an einem oder mehreren anderen Installationsstandorten gesammelt wurden, und
die Recheneinheit (108) nach einem der Ansprüche 5 bis 7.

9. Computerprogramm (425), umfassend Anweisungen, die, wenn sie von einer Verarbeitungseinheit (410) einer Recheneinheit (108) ausgeführt werden, die Recheneinheit (108) nach einem der Ansprüche 5 bis 7 veranlassen, das Verfahren nach einem der Ansprüche 1 bis 4 durchzuführen.

## Revendications

1. Procédé pour générer au moins une opération d'installation pour au moins un processus d'installation en cours d'un système de transport de personnes ou d'un système de commande d'accès au niveau d'un site d'installation (104), le procédé comprenant :
l'obtention (202) d'informations de site de l'au moins un processus d'installation en cours au niveau du site d'installation (104) à partir d'une unité de commande de site (102) agencée au niveau du site d'installation (104), l'obtention (204) d'informations de site collectées à partir d'un ou de plusieurs processus d'installation précédents au niveau d'un ou de plusieurs autres sites d'installation à partir d'une ou de plusieurs bases de données externes (106a-106n),
la définition (206) d'au moins une opération d'installation pour l'au moins un processus d'installation en cours sur la base des informations de site de l'au moins un processus d'installation en cours et des informations de site collectées à partir des un ou plusieurs processus d'installation précédents, dans lequel l'au moins une opération d'installation comprend :
la mise à jour d'une ou de plusieurs versions de logiciel, la mise à jour d'un ou de plusieurs paramètres d'opération et/ou l'activation d'une ou de plusieurs fonctionnalités, et
la génération (208) d'au moins un signal comprenant une instruction pour réaliser l'au moins une opération d'installation pour l'au moins un processus d'installation en cours vers l'unité de commande de site (102),
dans lequel la définition (206) de l'au moins une opération d'installation pour l'au moins un processus d'installation en cours comprend :
la détection d'au moins un problème dans les informations de site de l'au moins un processus d'installation en cours, et
la définition de l'au moins une opération d'installation en appliquant un module d'apprentissage automatique (450), dans lequel le module d'apprentissage automatique (450) reçoit l'au moins un problème détecté dans les informations de site de l'au moins un processus d'installation en cours comme ses données d'entrée et génère l'au moins une opération d'installation comme les données de sortie du module d'apprentissage automatique (450) en appliquant une ou plusieurs techniques d'apprentissage automatique, et
dans lequel les informations de site collectées à partir d'un ou de plusieurs processus d'installation précédents au niveau d'un ou de plusieurs autres sites d'installation sont utilisées comme données d'entraînement pour entraîner le module d'apprentissage automatique (450).

2. Procédé selon la revendication 1, comprenant en outre la génération d'une demande d'assistance à distance à un centre de surveillance à distance (310) sur la base des informations de site obtenues de l'au moins un processus d'installation en cours et/ou de l'au moins une opération d'installation définie.

3. Procédé selon l'une quelconque des revendications précédentes, comprenant en outre la fourniture des informations de site de l'au moins un processus d'installation en cours et/ou de l'au moins une opération d'installation définie aux une ou plusieurs bases de données (106a-106n) pour un ou plusieurs processus d'installation à venir au niveau d'un ou de plusieurs autres sites d'installation.

4. Procédé selon l'une quelconque des revendications précédentes, dans lequel les informations de site de l'au moins un processus d'installation en cours sont obtenues, par l'unité de commande de site (102), à partir d'un ou de plusieurs dispositifs de site installés (302a-302c), d'un ou de plusieurs dispositifs de site pas encore installés (304), d'un ou de plusieurs dispositifs ou systèmes externes (306a, 306b) et/ou d'un rapport de retour d'un ou de plusieurs outils (308).

5. Unité de calcul (108) permettant de générer au moins une opération d'installation pour au moins un processus d'installation en cours d'un système de transport de personnes ou d'un système de commande d'accès au niveau d'un site d'installation (104), dans laquelle l'unité de calcul (108) comprend une unité de traitement (410) étant configurée pour amener l'unité de calcul (108) à au moins réaliser les opérations suivantes :
obtenir des informations de site de l'au moins un processus d'installation en cours au niveau du site d'installation à partir d'une unité de commande de site (102) agencée au niveau du site d'installation (104), obtenir des informations de site collectées à partir d'un ou de plusieurs processus d'installation précédents au niveau d'un ou de plusieurs autres sites d'installation à partir d'une ou de plusieurs bases de données externes (106a-106n),
définir au moins une opération d'installation pour l'au moins un processus d'installation en cours sur la base des informations de site de l'au moins un processus d'installation en cours et des informations de site collectées à partir des un ou plusieurs processus d'installation précédents, dans laquelle l'au moins une opération d'installation comprend : la mise à jour d'une ou de plusieurs versions de logiciel, la mise à jour d'un ou de plusieurs paramètres d'opération et/ou l'activation d'une ou de plusieurs fonctionnalités, et
générer au moins un signal comprenant une instruction pour réaliser l'au moins une opération d'installation pour l'au moins un processus d'installation en cours vers l'unité de commande de site (102),
dans laquelle la définition de l'au moins une opération d'installation pour l'au moins un processus d'installation en cours comprend que l'unité de calcul (108) est configurée pour :
détecter au moins un problème dans les informations de site de l'au moins un processus d'installation en cours,
et
définir l'au moins une opération d'installation en appliquant un module d'apprentissage automatique (450),
dans laquelle le module d'apprentissage automatique (450) est configuré pour recevoir l'au moins un problème détecté dans les informations de site de l'au moins un processus d'installation en cours comme données d'entrée et pour générer l'au moins une opération d'installation comme données de sortie du module d'apprentissage automatique (450) en appliquant une ou plusieurs techniques d'apprentissage automatique, et
dans laquelle les informations de site collectées à partir d'un ou de plusieurs processus d'installation précédents au niveau d'un ou de plusieurs autres sites d'installation sont utilisées comme données d'entraînement pour entraîner le module d'apprentissage automatique (450).

6. Unité de calcul (108) selon la revendication 5, configurée en outre pour générer une demande d'assistance à distance à un centre de surveillance à distance (310) sur la base des informations de site obtenues de l'au moins un processus d'installation en cours et/ou de l'au moins une opération d'installation définie.

7. Unité de calcul (108) selon l'une quelconque des revendications 5 ou 6, configurée en outre pour fournir les informations de site de l'au moins un processus d'installation en cours et/ou de l'au moins une opération d'installation définie aux une ou plusieurs bases de données (106a-106n) pour un ou plusieurs processus d'installation à venir au niveau d'un ou de plusieurs autres sites d'installation.

8. Système d'assistance à l'installation (100) permettant de générer au moins une opération d'installation pour au moins un processus d'installation en cours d'un système de transport de personnes ou d'un système de commande d'accès au niveau d'un site d'installation (104), le système d'assistance à l'installation (100) comprenant :
une unité de commande de site (102) agencée au niveau du site d'installation (104),
une ou plusieurs bases de données externes (106a-106n) stockant au moins des informations de site collectées à partir d'un ou de plusieurs processus d'installation précédents au niveau d'un ou de plusieurs autres sites d'installation, et
l'unité de calcul (108) selon l'une quelconque des revendications 5 à 7.

9. Programme informatique (425) comprenant des instructions qui, lorsqu'elles sont exécutées par une unité de traitement (410) d'une unité de calcul (108), amènent l'unité de calcul (108) selon l'une quelconque des revendications 5 à 7 à réaliser le procédé selon l'une quelconque des revendications 1 à 4.
